(19) **Europäisches Patentamt**
**European Patent Office**
**Office européen des brevets**

(11) **EP 3 433 159 B1**

(12) **FASCICULE DE BREVET EUROPEEN**

(45) Date de publication et mention
de la délivrance du brevet:
**12.02.2020 Bulletin 2020/07**

(51) Int Cl.:
***B62D 5/04*** *(2006.01)*

(21) Numéro de dépôt: **17716968.7**

(22) Date de dépôt: **23.03.2017**

(86) Numéro de dépôt international:
**PCT/FR2017/050677**

(87) Numéro de publication internationale:
**WO 2017/162987 (28.09.2017 Gazette 2017/39)**

(54) **PROCÉDÉ DE GESTION DE DIRECTION ASSISTÉE AVEC RECONSTRUCTION INDIRECTE DE L'INFORMATION DE COUPLE VOLANT**

STEUERUNGSVERFAHREN EINER SERVOLENKUNG UND INDIREKTE REKONSTRUKTION DES LENKDREHMOMENTS

CONTROL METHOD OF A POWER STEERING WITH INDIRECT RECONSTRUCTION OF THE STEERING TORQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2016 FR 1652528**

(43) Date de publication de la demande:
**30.01.2019 Bulletin 2019/05**

(73) Titulaire: **JTEKT Europe**
**69540 Irigny (FR)**

(72) Inventeurs:
• **MOULAIRE, Pascal**
**69890 La Tour de Salvagny (FR)**
• **BAUDIN, Yoann**
**69007 Lyon (FR)**
• **GAUDIN, Serge**
**69700 Saint Jean de Toulas (FR)**
• **TAOFIFENUA, Ofaina**
**69009 Lyon (FR)**
• **YAMAMOTO, Kazusa**
**6900 Lyon (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 1 995 150    US-A1- 2015 367 881**

## Description

La présente invention concerne un procédé de gestion de dispositif de direction assistée pour véhicule, notamment pour véhicule automobile.

Actuellement, de nombreux dispositifs de direction assistée utilisent un moteur d'assistance électrique, qui est asservi selon des lois d'assistance prédéterminées.

Un tel asservissement requiert en pratique de connaître à chaque instant la valeur du couple, dit « couple volant », qui est exercé par le conducteur du véhicule sur le volant de conduite, dans la mesure où l'effort d'assistance que devra délivrer le moteur d'assistance dépend étroitement de ladite valeur de couple volant.

C'est pourquoi, les dispositifs connus de direction assistée électrique comportent systématiquement un capteur de couple volant qui est installé sur la colonne de direction et qui est spécifiquement dédié à la mesure dudit couple volant.

L'un des inconvénients d'une telle structure est qu'elle est relativement vulnérable à une éventuelle défaillance du capteur de couple volant.

En effet, on comprend aisément que si le capteur de couple volant renvoie une information de couple volant qui n'est plus représentative de la situation réelle, ou bien même si ledit capteur de couple volant cesse purement et simplement de fournir la moindre information de couple volant, alors l'application des lois d'assistance sera faussée, au risque de provoquer un comportement erratique, voire dangereux, du moteur d'assistance et donc du véhicule. EP 1 995 150 A2 décrit un tel dispositif selon le préambule de la revendication 1.

Par mesure de sécurité, une solution connue consiste à interrompre totalement l'assistance de direction lorsqu'une défaillance du capteur de couple volant est détectée.

En pareille situation, le conducteur peut donc conserver le contrôle manuel du véhicule, mais se trouve privé d'assistance de direction, ce qui lui impose un surcroît d'efforts et de vigilance.

Par ailleurs, comme tout autre organe du dispositif de direction assistée, le capteur de couple volant possède un poids et un encombrement propres, qui augmentent d'autant le poids et l'encombrement du dispositif de direction, et plus globalement du véhicule.

Les objets assignés à l'invention visent par conséquent à remédier aux inconvénients susmentionnés et à proposer un nouveau système de direction assistée qui, tout en étant léger et peu onéreux à mettre en œuvre, reste opérationnel même en cas de défaillance, voire d'absence, d'un capteur spécifiquement affecté à la mesure de couple volant.

Les objets assignés à l'invention sont atteints au moyen d'un procédé de gestion d'un dispositif de direction assistée pour véhicule, ledit dispositif de direction assistée comprenant un volant de conduite qui permet à un conducteur de manœuvrer ledit dispositif de direction assistée en exerçant un effort, dit « couple volant », sur ledit volant de conduite, ainsi qu'un moteur d'assistance destiné à fournir un effort d'assistance pour assister la manœuvre dudit dispositif de direction assistée, ledit procédé étant caractérisé en ce qu'il comprend une étape (a) de reconstruction de couple volant au cours de laquelle on évalue le couple volant, tel que celui-ci est effectivement exercé par le conducteur sur le volant de conduite, en reconstruisant une information représentative dudit couple volant, dite « couple volant estimé », à partir de données dites « données externes » que l'on recueille au sein du dispositif de direction assistée ou au sein du véhicule, mais en dehors d'un capteur de couple volant spécifiquement dédié à la mesure dudit couple volant, lesdites données externes comprenant une valeur dite « angle volant » représentative de la position angulaire du volant de conduite, une valeur dite « angle moteur » représentative de la position angulaire de l'arbre du moteur d'assistance, ainsi que les dérivées temporelles dudit angle volant et dudit angle moteur.

L'invention se propose donc d'estimer la valeur de couple volant à partir de la position angulaire du volant de conduite et de la position angulaire de l'arbre du moteur d'assistance, et des dérivées temporelles calculées à partir de ces données, données qui peuvent avantageusement être acquises, et plus particulièrement mesurées, au moyen de capteurs intégrés déjà présents de façon standard au niveau de volant de conduite d'une part, et du moteur d'assistance d'autre part, sans qu'il soit nécessaire de faire appel à un troisième capteur distinct, qui serait exclusivement dédié à la mesure du couple volant.

Avantageusement, en reconstruisant une information fiable de couple volant à partir de données externes en provenance d'organes autres que le capteur de couple volant, l'invention permet de s'affranchir dudit capteur de couple volant, et d'assurer la continuité du service de l'assistance de direction de façon fiable et durable alors même qu'aucun signal exploitable n'est récupérable parmi le ou les signaux normalement émis par ledit capteur de couple volant, par exemple en raison d'une défaillance dudit capteur de couple volant.

Mieux encore, un tel procédé permet même de renoncer purement et simplement à la présence matérielle d'un capteur de couple volant spécifique, et de remplacer celui-ci par une sorte de "capteur virtuel" qui exploite des données externes rendues accessibles par des capteurs tiers, déjà présents à d'autres fins au sein du dispositif de direction assistée.

Ainsi, l'invention permet en quelque sorte d'ajouter une fonction à des capteurs déjà existants, qui n'ont en principe pas pour finalité, à l'origine, de déterminer la valeur du couple volant, et ainsi d'utiliser *in fine* lesdits capteurs existants en lieu et place d'un capteur additionnel de couple volant.

En utilisant des capteurs déjà existants de manière polyvalente, à plusieurs fins dont celle (non exclusive) de reconstruire une information de couple volant, on peut donc avantageusement faire l'économie d'un capteur de couple volant spécifique, et ainsi simplifier et alléger la structure du dispositif de direction assistée.

Par ailleurs, en utilisant conjointement d'une part une information de positions angulaires, qui permet de calculer un déplacement relatif entre le volant et le moteur, à partir duquel on peut estimer une première composante de couple volant, sous forme d'un terme de raideur modélisant une liaison ressort entre le volant et le moteur d'assistance, et d'autre part une information de vitesses angulaires, qui permet de calculer une vitesse relative entre le volant et le moteur, à partir de laquelle on peut estimer une seconde composante de couple volant, sous forme d'un terme de dissipation modélisant une liaison de type amortisseur visqueux, l'invention permet de calculer précisément le couple volant estimé en évitant des divergences du modèle de calcul, et permet ainsi à l'algorithme d'estimation du couple volant, et donc plus globalement au processus de régulation de l'assistance de direction, de gagner en stabilité.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une représentation schématique, un dispositif de direction auquel s'applique l'invention.

La figure 2 illustre, au moyen d'un schéma-bloc, une étape (a) de reconstruction de couple volant selon l'invention.

La figure 3 illustre, au moyen d'un schéma-bloc, un exemple de mise en œuvre de l'invention au sein d'un procédé de régulation en boucle ouverte du moteur d'assistance.

La figure 4 illustre, au moyen d'un schéma-bloc, un exemple de mise en œuvre de l'invention au sein d'un procédé de régulation en boucle fermée du moteur d'assistance.

La figure 5 illustre un exemple de loi d'évolution du coefficient de raideur utilisé, en fonction de la vitesse du véhicule.

La figure 6 illustre un exemple de loi d'évolution du coefficient de viscosité utilisé, en fonction de la vitesse du véhicule.

La figure 7 illustre un exemple de loi d'évolution, en fonction de la vitesse du véhicule, de fréquences de coupure de filtres passe-bas utilisés pour filtrer le terme de raideur et/ou le terme de dissipation calculés selon l'invention.

L'invention concerne un procédé de gestion d'un dispositif 1 de direction assistée pour véhicule 2, et plus particulièrement pour véhicule 2 automobile destiné au transport de personnes.

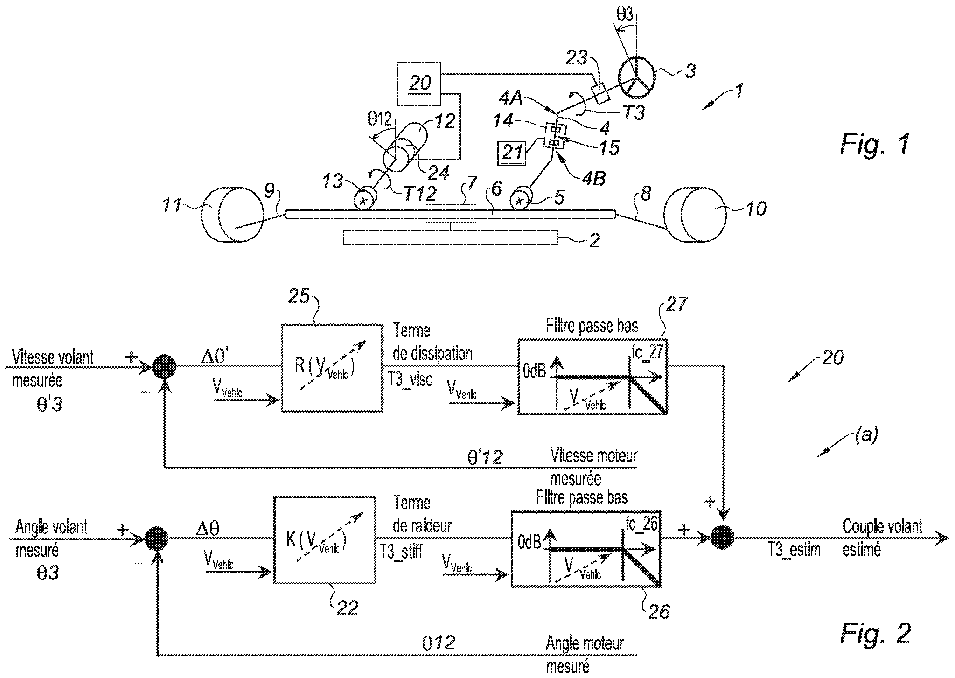

De façon connue en soi, et tel que cela est visible sur la figure 1, ledit dispositif de direction assistée 1 comprend un volant de conduite 3 qui permet à un conducteur de manœuvrer ledit dispositif de direction assistée 1 en exerçant un effort, dit « couple volant » T3, sur ledit volant de conduite 3.

Ledit volant de conduite 3 est de préférence monté sur une colonne de direction 4, guidée en rotation sur le véhicule 2, et qui engrène, au moyen d'un pignon de direction 5, sur une crémaillère de direction 6, qui est elle-même guidée en translation dans un carter de direction 7 fixé audit véhicule 2.

De préférence, les extrémités de ladite crémaillère de direction 6 sont reliées chacune à une biellette de direction 8, 9 raccordée au porte-fusée d'une roue directrice 10, 11 (respectivement une roue gauche 10 et une roue droite 11), de telle sorte que le déplacement longitudinal en translation de la crémaillère 6 permet de modifier l'angle de braquage (angle de lacet) des roues directrices.

Les roues directrices 10, 11 peuvent par ailleurs de préférence être également des roues motrices.

Le dispositif de direction assistée 1 comprend également un moteur d'assistance 12 destiné à fournir un effort d'assistance T12, et plus particulièrement un couple d'assistance T12, pour assister la manœuvre dudit dispositif de direction assistée 1.

Le moteur d'assistance 12 sera de préférence un moteur électrique, à double sens de fonctionnement, et préférentiellement un moteur électrique rotatif, de type brushless.

Le moteur d'assistance 12 peut venir en prise, le cas échéant par l'intermédiaire d'un réducteur de type réducteur à engrenage, soit sur la colonne de direction 4 elle-même, pour former un mécanisme dit « à simple pignon », soit directement sur la crémaillère de direction 6, au moyen par exemple d'un second pignon 13 distinct du pignon de direction 5 qui permet à la colonne de direction 4 d'engrener sur la crémaillère 6, de sorte à former un mécanisme dit « à double pignon », tel que cela est illustré sur la figure 1, ou bien encore au moyen d'une vis à billes qui coopère avec un filetage correspondant de ladite crémaillère 6, à distance dudit pignon de direction 5.

Selon l'invention, et tel que cela est illustré sur la figure 2, le procédé comprend une étape (a) de reconstruction de couple volant au cours de laquelle on évalue le couple volant T3, tel que celui-ci est effectivement exercé par le conducteur sur le volant de conduite 3, en reconstruisant une information représentative dudit couple volant, dite « couple volant estimé » T3_estim, à partir de données dites « données externes » que l'on recueille au sein du dispositif de direction 1 ou au sein du véhicule 2, mais en dehors d'un capteur de couple volant 14 spécifiquement dédié à la mesure dudit couple volant.

En d'autres termes, on évalue le couple volant T3 sans faire appel, ou à tout le moins sans avoir besoin de faire appel, à un éventuel capteur de couple volant 14 qui serait spécifiquement dédié à la mesure dudit couple volant T3, mais en reconstruisant une information représentative dudit couple volant, dite « couple volant estimé » T3_estim, à partir de données dites « données externes » que l'on recueille en dehors d'un tel capteur de couple volant spécifique 14.

Les données externes utilisées aux fins d'estimation du couple volant T3_estim comprendront avantageusement, tel que cela sera détaillé plus loin, une valeur dite « angle volant » θ3 représentative de la position angulaire du volant de conduite 3, une valeur dite « angle moteur » θ12 représentative de la position angulaire de l'arbre du moteur d'assistance 12, ainsi que les dérivées temporelles dudit angle volant et dudit angle moteur (dérivées qui pourront plus particulièrement être calculées à partir des valeurs d'angle volant et d'angle moteur mesurées.)

Le calcul qui permet de déterminer le couple volant estimé T3_estim à partir des données externes sera effectué par une unité de reconstruction de couple volant 20 appropriée.

Les données externes pourront par exemple être mises à disposition de l'unité de reconstruction de couple volant 20, par les capteurs ou les systèmes concernés, sur le réseau de bord CAN (« Controller Area Network ») du véhicule 2.

Comme indiqué plus haut, l'étape (a) de reconstruction de couple volant fait appel uniquement à des données externes, c'est-à-dire à des paramètres, et notamment à des paramètres mesurés, qui sont représentatifs de l'état du dispositif de direction 1 et/ou de l'état du véhicule 2 à l'instant considéré, mais qui ne dépendent pas du fonctionnement d'un capteur de couple spécifique 14, et qui proviennent d'autres organes du dispositif de direction assistée voire d'autres systèmes équipant le véhicule 2, et notamment qui proviennent d'autres capteurs 23, 24 par ailleurs déjà présents sur ledit dispositif de direction assistée 1, et/ou, respectivement, déjà présents sur lesdits autres systèmes équipant le véhicule 2.

Ainsi, l'invention permet avantageusement de conserver en toutes circonstances une information fiable, et mise à jour sensiblement en temps réel, quant à la valeur effective du couple volant T3, et ce y compris en cas de panne du capteur de couple spécifique 14, voire en cas d'absence pure et simple de capteur de couple spécifique 14, c'est-à-dire en pratique indépendamment de la présence et/ou du bon fonctionnement de tout capteur de couple 14 qui serait dédié exclusivement à la mesure du couple volant T3 et installé à cet effet sur la colonne de direction 4.

Avantageusement, le procédé selon l'invention prévoit en effet de recueillir les données externes nécessaires et suffisantes à l'évaluation du couple volant estimé T3_estim non plus par l'intermédiaire d'un capteur de couple spécifique 14 mais au moyen de capteurs tiers 23, 24, qui sont installés par ailleurs sur le dispositif de direction assistée 1 ou plus généralement sur le véhicule 2 dans une autre finalité que celle de mesurer le couple volant T3, c'est-à-dire qui contribuent par ailleurs à la réalisation d'au moins une fonction (notamment de régulation) autre que la fonction de reconstruction du couple volant (ce qui revient à faire une utilisation au moins double desdits capteurs tiers, dont une utilisation pour l'estimation du couple volant et au moins une autre utilisation).

On entend par « capteur de couple volant spécifique » 14 un capteur mis en place spécialement au sein du dispositif de direction assistée 1, par exemple sur la colonne de direction 4, afin de mesurer le couple volant T3, et ayant pour finalité principale, voire exclusive, de fournir une mesure du couple volant T3, quelle que soit par ailleurs la technologie de mesure employée par ledit capteur de couple volant 14.

Ainsi, un tel capteur de couple volant 14 spécifique peut être formé par tout sous-ensemble qui comprendra d'une part un organe élastiquement déformable en torsion 15 (dit aussi « corps d'épreuve »), tel qu'une barre de torsion 15, qui est interposé axialement entre un tronçon amont 4A de la colonne de direction 4, portant le volant de conduite 3, et un tronçon aval 4B de la colonne de direction 4, portant le pignon de direction 5, de manière à créer une séparation axiale entre ledit tronçon amont 4A et ledit tronçon aval 4B, ledit organe élastiquement déformable 15 étant intentionnellement moins rigide en torsion, c'est-à-dire plus facilement déformable élastiquement en torsion, que les tronçons amont 4A et aval 4B de la colonne de direction 4 qui le bordent, de manière à permettre une déformation élastique en torsion qui soit localisée principalement au niveau dudit organe élastiquement déformable 15 et qui soit suffisamment ample pour être aisément détectable, et d'autre part au moins un organe senseur capable de, et suffisant pour, générer un signal quantifiant l'ampleur de la déformation angulaire en torsion de l'organe élastiquement déformable 15.

Plus particulièrement, et de façon connue en soi, un capteur de couple volant 14 spécifique pourra comprendre un organe senseur en deux parties, une première partie affectée au tronçon amont 4A, et une seconde partie affectée au tronçon aval 4B, de manière à pouvoir, grâce à une prise de mesure répartie en deux points espacés axialement et situés de part et d'autre de la séparation entre le tronçon amont 4A et le tronçon aval 4B, quantifier le déplacement angulaire relatif du tronçon amont 4A par rapport au tronçon aval 4B, c'est-à-dire la déformation en torsion de l'organe élastiquement déformable 15.

Le capteur de couple volant 14 spécifique, et donc les différentes parties de son organe senseur, pourront faire appel à toute technologie appropriée.

Ainsi, par exemple, le capteur de couple 14 pourra être un capteur à variation de flux magnétique comprenant une première partie formée par une série d'aimants de polarité alternée, fixée au tronçon amont 4A, et une seconde partie formant un collecteur de flux magnétique, fixée au tronçon aval 4B, de telle sorte que la polarité et l'intensité du flux magnétique mesuré en sortie du collecteur de flux par une sonde à effet Hall indique la direction et l'amplitude du déplacement relatif du tronçon amont 4A par rapport au tronçon aval 4B.

En variante, la première partie de l'organe senseur pourra être agencée pour mesurer le déplacement angulaire du tronçon amont 4A tandis que la seconde partie de l'organe senseur mesure le déplacement angulaire du tronçon aval 4B de la colonne de direction, de l'autre côté de l'organe élastiquement déformable 15, la différence entre ces deux déplacements angulaires correspondant à la déformation en torsion.

Comme indiqué plus haut, le procédé pourra de préférence servir à gérer un dispositif de direction assistée 1 au sein duquel le volant de conduite 3 est monté sur une colonne de direction 4 qui engrène sur une crémaillère de direction 6, et au sein duquel le moteur d'assistance 12 vient en prise sur ladite colonne de direction 4 ou sur ladite crémaillère de direction 6.

Au sein d'un tel dispositif 1, la connaissance de la valeur du couple volant T3 est nécessaire à la gestion du dispositif de direction 1, et plus particulièrement à l'asservissement du moteur d'assistance 12.

Selon une première possibilité de mise en œuvre, correspondant à la figure 1, ledit dispositif de direction assistée 1 comportera donc un capteur de couple volant spécifique 14 qui est monté sur la colonne de direction 4 et agencé pour fournir, en fonctionnement normal, une mesure directe du couple volant T3.

L'étape (a) de reconstruction de couple volant pourra alors avantageusement intervenir automatiquement, de manière ponctuelle, en cas de défaillance du capteur de couple volant spécifique 14, pour substituer une valeur de couple volant estimée T3_estim à la mesure directe du couple volant T3.

En d'autres termes, la reconstruction de couple volant selon l'invention pourra être utilisée de manière auxiliaire, comme mesure de sécurité palliative destinée à assurer la continuité de la fourniture de l'information de couple volant T3, et donc la continuité du fonctionnement de l'assistance de direction, en cas de détection d'une panne ou d'une perte de fiabilité du capteur de couple volant spécifique 14.

Plus particulièrement, le procédé pourra comprendre à cet effet une étape de surveillance au cours de laquelle on surveille de la présence, et le cas échéant on évalue la fiabilité, du ou des signaux émanant du capteur de couple volant 14 spécifique, puis une étape de commutation au cours de laquelle, si l'on détecte une défaillance dudit capteur de couple volant 14, et notamment si l'on détecte la perte de l'un ou des signaux émanant du capteur de couple volant 14, on modifie le mode d'acquisition du couple volant T3 de sorte à abandonner la mesure directe assurée par le capteur de couple volant 14 pour passer à une reconstruction de couple volant selon l'invention, qui fournit un couple volant estimé T3_estim à partir de données externes autres.

Le circuit auxiliaire chargé de la reconstruction du couple volant (circuit qui comprend notamment l'unité de reconstruction 20 susmentionnée et qui pourra donc porter la même référence 20 dans ce qui suit) est bien entendu autonome et indépendant du circuit de mesure principal 21 qui est associé au capteur de couple 14 et dépendant dudit capteur de couple 14 spécifique.

L'étape de commutation susmentionnée permet donc, en cas de nécessité, de déconnecter ledit circuit de mesure principal 21, et ainsi de supprimer tout lien entre l'assistance de direction et le capteur de couple 14 défaillant, pour remplacer ledit circuit de mesure principal 21 par le circuit auxiliaire de reconstruction 20, qui recourt à des sources d'information, et notamment à des capteurs 23, 24 tiers, qui sont distincts et totalement indépendants du capteur de couple volant 14 ou des signaux émis (ou plus émis) par ce dernier.

Avantageusement, la présence, voire l'utilisation, redondante d'une part d'un circuit principal 21 assurant une mesure directe de couple volant T3 grâce à un capteur de couple volant 14 spécifique et d'autre part d'un circuit auxiliaire 20 assurant une reconstruction T3_estim du couple volant par une estimation réalisée à partir d'autres données (externes), permet de garantir en toutes circonstances la fourniture d'une information véritablement représentative du couple volant T3, fiable et activement mise à jour, ce qui accroît significativement la sécurité de fonctionnement du dispositif de direction assistée 1.

Selon une autre (seconde) possibilité préférentielle de mise en œuvre, la colonne de direction 4 sera au contraire dépourvue de capteur de couple volant spécifique 14, et plus particulièrement dépourvue de barre de torsion 15 destinée à mesurer le couple volant T3.

Un tel agencement correspondrait à celui de la figure 1 sur lequel on aurait simplement remplacé la représentation du capteur de couple 14 et de la barre de torsion par une colonne de direction 4 ininterrompue, et retiré le circuit de mesure 21 correspondant.

L'étape (a) de reconstruction de couple volant (et donc l'unité de reconstruction 20) pourra alors être utilisée en fonctionnement normal, de manière permanente, pour fournir la valeur de couple volant (en l'espèce la valeur de couple volant estimé T3_estim) qui est nécessaire à la gestion du dispositif de direction assistée 1, et plus particulièrement à l'asservissement du moteur d'assistance 12.

En d'autres termes, selon cette seconde possibilité de mise en œuvre, on utilise un dispositif d'assistance de direction 1 au sein duquel le capteur de couple volant 14, et plus particulièrement la barre de torsion 15 correspondante, qui est habituellement placé(e) sur la colonne de direction 4, est supprimé(e) et remplacé(e) par un circuit de reconstruction de couple 20 permettant d'estimer le couple volant T3_estim sur la base de données externes, conformément à l'invention.

Avantageusement, l'étape (a) de reconstruction de couple volant est en effet suffisamment fiable pour être utilisée par défaut, à titre principal, et même comme moyen unique, pour évaluer la valeur réelle du couple volant T3, en calculant une valeur de couple volant estimé T3_estim effectivement représentative dudit couple volant T3, c'est-à-dire en quelque sorte pour "mesurer" indirectement le couple volant T3, et pour permettre ensuite entre autres un asservissement actif du moteur d'assistance 12 sur le fondement de ladite valeur couple volant estimé T3_estim.

Selon cette seconde possibilité de mise en œuvre, on peut donc faire l'économie structurelle d'un capteur de couple volant 14 matériel (au profit d'un capteur virtuel capable de reconstruire la même information de couple volant T3 à partir de données tierces externes), et donc réaliser à moindre coût un dispositif de direction assistée 1 compact et allégé, à la fois fiable et performant.

En définitive, l'invention permettra de connaître la valeur du couple volant T3 au sein d'un dispositif de direction assistée 1 alors même que ledit dispositif 1, et plus particulièrement la colonne de direction 4 dudit dispositif 1, est dépourvu(e) de capteur de couple volant 14 (et plus particulièrement de barre de torsion 15), ou bien alors même que le dispositif 1, bien que possédant un capteur de couple volant 14 spécifique, est privé (temporairement ou définitivement) de l'usage d'un tel capteur de couple volant 14.

Bien entendu, on pourra employer comme données externes tout paramètre ou toute combinaison de paramètres qui possède(nt) une origine autre qu'un capteur de couple volant spécifique 14 et qui est (sont) néanmoins porteur(s) d'une information exploitable pour reconstruire, au moyen d'un modèle mathématique approprié, une valeur T3_estim représentative du couple volant T3.

Lors de l'étape (a) de reconstruction de couple volant, tel que cela est illustré sur la figure 2, et selon une caractéristique préférentielle qui peut constituer une invention à part entière, et notamment qui trouve à s'appliquer tout aussi bien lorsque le procédé selon l'invention est utilisé ponctuellement en tant que système de secours se substituant à un capteur de couple volant 14 défaillant que lorsque ledit procédé est utilisé en permanence en tant que moyen principal, voire exclusif, de mesure du couple volant T3, on recueille comme données externes d'une part une valeur dite « angle volant » $\theta 3$ représentative de la position angulaire (en lacet) du volant de conduite 3, et d'autre part une valeur dite « angle moteur » $\theta 12$ représentative de la position angulaire de l'arbre du moteur d'assistance 12, on calcule la différence, dite « déplacement relatif » $\Delta\theta = \theta 3 - \theta 12$, entre l'angle volant $\theta 3$ et l'angle moteur $\theta 12$, puis l'on multiplie le déplacement relatif $\Delta\theta$ par un coefficient de raideur K prédéterminé, de sorte à obtenir une première composante de l'angle volant estimé, dite « terme de raideur » T3_stiff :

$$T3\_stiff = K \times \Delta\theta = K \times (\theta 3 - \theta 12)$$

Le coefficient de raideur K sera fourni par un abaque de raideur (dit également « cartographie », ou « map ») stocké dans une mémoire non volatile d'une unité de calcul de terme de raideur 22 de l'unité de reconstruction de couple volant 20.

Ledit coefficient de raideur $\underline{K}$ sera représentatif d'un comportement de déformation élastique en torsion de type ressort (de torsion) entre le volant de conduite 3 et l'arbre du moteur d'assistance 12.

De préférence, l'angle volant $\theta 3$ (première donnée externe) est mesuré au moyen d'un capteur de position angulaire de volant 23 qui est associé au volant de conduite 3.

Le capteur de position angulaire de volant 23 correspondra avantageusement à un capteur "constructeur" qui est intégré d'emblée au véhicule 2 par le constructeur dudit véhicule, au niveau du sous-ensemble qui porte le volant de conduite 3 et auquel sera raccordée la colonne de direction 4.

Ce capteur 23 est donc systématiquement déjà présent par défaut au sein des véhicules 2.

L'exploitation d'un tel capteur 23 aux fins (supplémentaires, en sus des raisons pour lesquelles ce capteur est initialement prévu) de déterminer indirectement, par reconstruction, le couple volant T3, permet avantageusement de se dispenser d'un capteur de couple volant 14 spécifique, et le cas échéant d'alléger la structure du dispositif de direction assistée 1 en renonçant purement et simplement à installer un capteur de couple volant 14 spécifique additionnel.

Le capteur de position angulaire de volant 23 pourra notamment être un capteur de type magnéto-résistif ou bien un capteur à effet Hall.

De préférence, l'angle moteur $\theta 12$ est quant à lui mesuré au moyen d'un capteur de position angulaire moteur 24, par exemple de type resolver, qui est intégré, par construction, au moteur d'assistance 12.

Ici encore, l'utilisation (et plus précisément l'extension d'utilisation) d'un capteur 24 intégré, systématiquement présent par défaut dans le dispositif de direction assistée 1, ici dans le moteur d'assistance 12, et initialement prévu pour d'autres usages, permet de faire l'économie d'un capteur de couple 14 additionnel.

En première approximation, et plus particulièrement lorsque le véhicule 2 circule à une vitesse Vvehic élevée, typiquement supérieure à 50 km/h, on pourrait éventuellement assimiler, d'un point de vue fonctionnel, le couple volant estimé T3_estim au (seul) terme de raideur T3_stiff mentionné plus haut, c'est-à-dire considérer que : T3_estim = T3_stiff.

La précision et la stabilité de l'estimation du couple volant pourraient en effet être considérées comme suffisantes, en pratique, dans de telles conditions.

Toutefois, selon une caractéristique préférentielle qui peut constituer une invention à part entière, et tel que cela est visible sur la figure 2, lors de l'étape (a) de reconstruction de couple volant, on calcule la dérivée temporelle $\theta'3 = d(\theta 3)/dt$ de l'angle volant $\theta 3$ pour estimer

la vitesse angulaire de rotation du volant de conduite, dite « vitesse volant » $\theta'3$, on calcule la dérivée temporelle $\theta'12 = d(\theta12)/dt$ de l'angle moteur $\theta12$ pour estimer la vitesse angulaire de rotation de l'arbre du moteur d'assistance 12, dite « vitesse moteur » $\theta'12$, on calcule la différence, dite « vitesse relative » $\Delta\theta'$, entre la vitesse volant et la vitesse moteur : $\Delta\theta' = \theta'3 - \theta'12$, puis l'on multiplie la vitesse relative $\Delta\theta'$ par un coefficient de viscosité R prédéterminé, de sorte à obtenir une (seconde) composante de l'angle volant estimé, dite « terme de dissipation » T3_visc :

$$T3\_visc = R \times \Delta\theta' = R \times (\theta'3 - \theta'12)$$

Cette seconde composante de l'angle volant estimé, dite « terme de dissipation » T3_visc, intervient dans la détermination du couple volant estimé T3_estim, et, plus préférentiellement, est ajoutée au terme de raideur T3_stiff pour obtenir le couple volant estimé T3_estim :

$$T3\_estim = T3\_stiff + T3\_visc$$

En d'autres termes, on détermine de préférence le couple volant estimé T3_estim comme étant la somme d'un terme de raideur T3_stiff et d'un terme de dissipation T3_visc.

Avantageusement, l'utilisation d'un terme de dissipation T3_visc, ici de préférence en complément du terme de raideur T3_stiff, permet en pratique d'éviter la divergence du modèle de calcul du couple volant estimé T3_estim, et ainsi de gagner en stabilité, notamment lorsque le véhicule circule à basse vitesse, typiquement à moins de 50 km/h.

Le coefficient de dissipation R sera fourni par un abaque de dissipation (dit également « cartographie », ou « map ») stocké dans une mémoire non volatile d'une unité de calcul de terme de dissipation 25 de l'unité de reconstruction de couple volant 20.

Ledit coefficient de dissipation R sera représentatif d'un comportement visqueux en torsion, de type amortisseur, entre le volant de conduite 3 et l'arbre du moteur d'assistance 12.

Ainsi, l'étape (a) de reconstruction du couple volant pourra utiliser, en définitive, un modèle de type ressort-amortisseur pour calculer, par la somme mentionnée plus haut, le couple volant estimé T3_estim = T3_stiff + T3_visc.

On notera que, afin d'exprimer l'angle moteur $\theta12$ dans le même référentiel que l'angle volant $\theta3$ (pour permettre un calcul homogène du déplacement relatif $\Delta\theta$), respectivement afin d'exprimer la vitesse moteur $\theta'12$ dans le même référentiel que la vitesse volant $\theta'3$ (pour permettre un calcul homogène de la vitesse relative $\Delta'\theta$), on tiendra compte, le cas échéant, des rapports de transmission des différentes liaisons cinématiques qui relient le moteur d'assistance 12 à la colonne de direction 4 et au volant 3, et en particulier du rapport de réduction d'un éventuel réducteur associé au moteur d'assistance 12, ou du rapport de transmission entre crémaillère 6 et pignon(s) 5, 13.

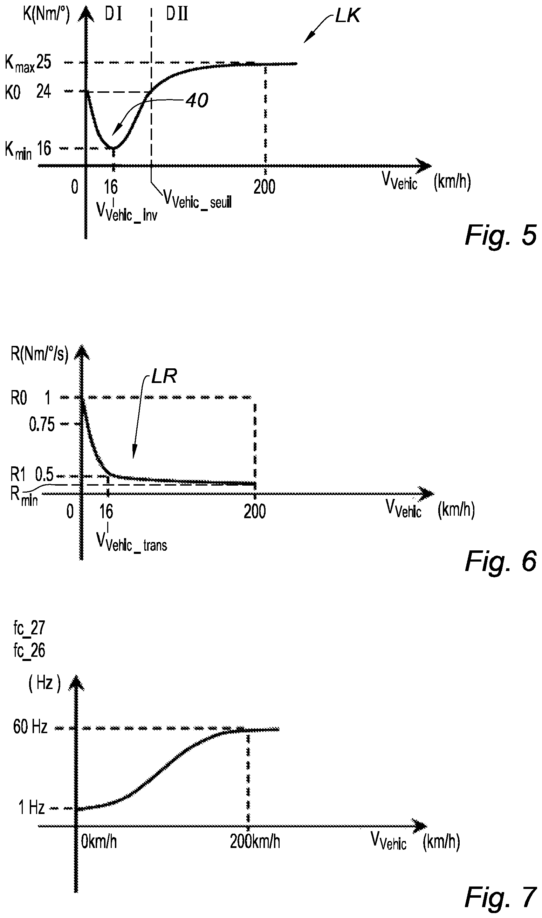

De préférence, et tel que cela est illustré sur les figures 2 et 5, le coefficient de raideur K est ajusté en fonction de la vitesse longitudinale Vvehic du véhicule 2.

Un tel ajustement permet notamment d'optimiser (en matière de temps de réponse, de précision et de stabilité), en fonction des conditions de roulage, les réponses statique et dynamique de la reconstruction de couple volant, et plus globalement les réponses statique et dynamique de l'asservissement du moteur d'assistance 12 qui découle de ladite reconstruction de couple volant.

De préférence, et tel que cela est illustré sur la figure 5, le coefficient de raideur K suit une loi d'évolution en fonction de la vitesse du véhicule Vvehic, dite « loi de raideur » LK, selon laquelle le coefficient de raideur K décroît tout d'abord (en valeur absolue), par rapport à sa valeur initiale K0 (non nulle) associée à une vitesse Vvehic nulle, pour atteindre un minimum Kmin associé à une vitesse Vvehic dite vitesse d'inversion Vvehic_inv, et augmente ensuite de nouveau (en valeur absolue) de façon croissante avec la vitesse, de sorte à atteindre de nouveau puis dépasser la valeur initiale K0 à partir et au-delà d'une vitesse Vvehic dite vitesse seuil Vvehic_seuil, qui marque la frontière entre un premier intervalle de vitesses, dit « domaine de basse vitesse » noté DI, qui s'étend de zéro à la vitesse seuil Vvehic_seuil choisie, et (au moins) un second intervalle de vitesses, dit « domaine de haute vitesse », noté DII, qui s'étend à partir et au-delà de ladite vitesse seuil Vvehic_seuil, jusqu'à la vitesse maximale du véhicule.

La vitesse seuil Vvehic_seuil sera choisie arbitrairement, par exemple de manière empirique, mais de sorte à être représentative d'une transition entre basses vitesses et hautes vitesses, et plus particulièrement d'une transition entre un mode « parking », correspondant à des vitesses adaptées aux manœuvres de stationnement, et un mode « roulage » correspondant aux vitesses usuellement atteintes lorsque le véhicule circule, sur route, autoroute ou même sur circuit.

Ainsi, ladite vitesse seuil Vvehic_seuil sera de préférence choisie égale ou inférieure à 50 km/h, et plus particulièrement entre 30 km/h et 35 km/h, et par exemple voisine de 32 km/h tel que cela est illustré sur la figure 5.

De préférence, et tel que cela est illustré sur la figure 5, la loi de raideur LK, présente donc un puits 40 pour les valeurs de vitesse basses, de telle sorte que, dans le domaine de basse vitesse DI, le coefficient de raideur K reste inférieur aux valeurs qu'il adopte dans le domaine de haute vitesse DII, et passe dans ledit domaine de basse vitesse DI par un minimum Kmin qui correspond de préférence à un minimum global (extremum inférieur) de la loi de raideur LK.

Le minimum de raideur Kmin sera de préférence atteint pour une vitesse d'inversion Vvehic_inv qui sera comprise entre 10 km/h et 25 km/h, et par exemple sensiblement égale à 16 km/h, tel que cela est illustré sur la figure 5.

On notera que, en pratique, ladite vitesse d'inversion Vvehic_inv pourra valoir sensiblement la moitié de la vitesse seuil Vvehic_seuil.

De préférence, la loi de raideur LK présentera, tel que l'indique la courbe de la figure 5 :

- une première portion (strictement) décroissante, de préférence convexe, entre un point de départ (0, K0) qui associe à une valeur de vitesse Vvehic nulle (c'est-à-dire à un véhicule en stationnement ou à l'arrêt) une raideur initiale K0 (non nulle, et valant ici 24 Nm/degré sur la figure 5), et un minimum (Vvehic_inv, Kmin) qui associe à la vitesse d'inversion Vvehic_inv, lorsque celle-ci est atteinte, un minimum de raideur Kmin (valant ici 16 Nm/degré),

- puis une seconde portion (strictement) croissante, de préférence convexe, entre ledit minimum (Vvehic_inv, Kmin) et un point de transition (qui peut correspondre à un point d'inflexion de la courbe représentative de la loi de raideur LK), qui associe à la vitesse seuil Vvehic_seuil une valeur de raideur proche de ou égale à la valeur de la raideur initiale K0,

- puis une troisième portion croissante, de préférence de pente inférieure à la pente (moyenne) de la seconde portion, et de préférence concave, qui tend, lorsque la vitesse Vvehic tend vers la vitesse maximale possible du véhicule, vers une valeur de raideur asymptotique (maximum de raideur) Kmax supérieure à la valeur de raideur initale K0 (et valant ici 25 Nm/degré).

De préférence, la loi de raideur LK est une fonction continue, et continûment dérivable, c'est-à-dire de classe C1.

Avantageusement, la régularité de la fonction de raideur LK (notamment entre les domaines de basse vitesse DI et de haute vitesse DII), ainsi que la réduction de la raideur K que ladite loi de raideur LK impose dans le domaine de basse vitesse DI (par la présence du puits 40), procure stabilité et continuité au calcul du couple estimé T3_estim, et améliore ainsi la gestion des transitions entre une situation de stationnement et une situation de roulage (et réciproquement).

En effet, les inventeurs ont constaté que les comportements statique et dynamique du véhicule 2, et par conséquent du dispositif asservi de direction assistée 1, sont très différents selon que le véhicule se trouve en situation de stationnement ou en situation de roulage.

En effet, aux basses vitesses, et plus particulièrement en stationnement, le comportement d'un pneumatique qui habille une roue 9, 10 s'apparente à un comportement de frottement sec, alors qu'en situation de roulage, et donc à haute vitesse, typiquement au-delà de 50 km/h, et donc en particulier à partir et au-delà de la vitesse seuil Vvehic_seuil susmentionnée (c'est-à-dire dans le domaine de haute vitesse DII susmentionné), le pneumatique se comporte, dans sa zone de comportement linéaire, comme une simple raideur.

Les limites de stabilité de l'asservissement du dispositif de direction 1, et plus particulièrement les limites de stabilité des algorithmes de calcul puis d'utilisation du couple volant estimé T3_estim, sont donc différentes en stationnement et en roulage.

Dans la mesure où la raideur K intervient directement dans la définition desdites limites de stabilité, il est particulièrement utile de faire varier ladite raideur en fonction de la situation du véhicule, et plus particulièrement de modifier ladite raideur K (et donc de conférer une valeur de raideur K différente) selon que le véhicule se trouve en état de stationnement (vitesse nulle), en état de roulage (à haute vitesse, notamment dans le domaine de haute vitesse DII susmentionné) ou en transition entre ces deux états (typiquement dans le puits 40 susmentionné, et notamment à partir et au-delà de la vitesse d'inversion Vvehic_inv, dans le domaine de basse vitesse DI), afin de garantir la stabilité de l'asservissement.

Respectivement, de manière alternative ou complémentaire à l'ajustement du coefficient de raideur K en fonction de la vitesse du véhicule, le coefficient de viscosité R est de préférence ajusté en fonction de la vitesse longitudinale Vvehic du véhicule 2.

Ici encore, un tel ajustement permet notamment d'optimiser (en matière de temps de réponse, de précision et de stabilité) les réponses statique et dynamique de la reconstruction de couple volant, et plus globalement de l'asservissement du moteur d'assistance 12 qui en découle, en fonction des conditions de roulage.

A titre d'exemple, on pourra diminuer, voire annuler, le coefficient de viscosité R lorsque la vitesse du véhicule Vvehic atteint ou dépasse un seuil de vitesse prédéterminé, par exemple 50 km/h, au-delà duquel le besoin en stabilité est moindre qu'aux basses vitesses (entre 0 km/h et 50 km/h).

Plus particulièrement, tel que cela est illustré sur la figure 6, le coefficient de viscosité R pourra suivre une loi d'évolution, dite « loi de viscosité » LR, décroissante en fonction de la vitesse du véhicule Vvehic.

De préférence, selon cette loi de viscosité LR, le coefficient de viscosité R pourra décroître (en valeur absolue) continûment en fonction de la vitesse Vvehic, tout d'abord fortement, selon une première portion de fonction décroissante de la vitesse, sensiblement linéaire voire légèrement convexe, depuis une valeur initiale R0 (non nulle, et valant ici 1 N.m/degré/s sur la figure 6) associée une vitesse nulle jusqu'à une valeur intermédiaire R1 associée à une vitesse dite « vitesse de transition » Vvehic_trans, puis moins fortement, selon une seconde portion de fonction décroissante, sensiblement linéaire ou légèrement convexe, présentant une pente moyenne plus faible que la première portion, et qui amène progressivement à une valeur de viscosité minimale Rmin, de préférence asymptotique.

La vitesse de transition Vvehic_trans sera de préférence comprise entre 10 km/h et 25 km/h, et par exemple sensiblement égale à 16 km/h. De façon particulièrement préférentielle, elle sera sensiblement égale à la vitesse d'inversion Vvehic_inv de la loi de raideur LK, si bien que le minimum de raideur Kmin correspondra à la viscosité intermédiaire R1.

La viscosité intermédiaire R1 pourra représenter sensiblement la moitié (i.e. environ 50 %) de la viscosité initiale R0, et la viscosité minimale Rmin entre 30 % et 45 % de ladite viscosité initiale R0.

De même que cela a été expliqué plus haut pour la loi de raideur LK, la loi de viscosité LR est de préférence une fonction continue, et continûment dérivable, c'est-à-dire de classe C1.

Par ailleurs, tel que cela est illustré sur la figure 2, le terme de raideur T3_stiff (composante « ressort ») est préférentiellement filtré au moyen d'un (premier) filtre passe-bas 26.

Le filtrage passe-bas permet avantageusement de réduire voire d'éliminer le bruit.

De préférence, la fréquence de coupure fc_26 dudit premier filtre passe-bas 26 est ajustée selon la vitesse longitudinale Vvehic du véhicule.

Avantageusement, l'ajustement de la fréquence de coupure fc_26 permet d'optimiser les réponses statique et dynamique de la reconstruction de couple et de l'asservissement du moteur d'assistance 12 qui en découle.

A titre d'exemple, et tel que cela est illustré sur la figure 7, la fréquence de coupure fc_26 augmentera selon une fonction croissante de la vitesse du véhicule, qui assure avantageusement la stabilité du calcul d'estimation de couple volant quelle que soit la vitesse.

Plus particulièrement, la fréquence de coupure fc_26 prendra une valeur basse (typiquement inférieure à 10 Hz, voire à 5 Hz, et par exemple de l'ordre de 1Hz) pour les basses vitesses (typiquement entre 0 km/h et 25 km/h, voire 30 km/h, et plus particulièrement dans le domaine de basse vitesse DI susmentionné).

En effet, la différence de comportement du véhicule 2 et du dispositif de direction assistée 1 selon que le véhicule se trouve en stationnement ou en roulage, et les implications de cette différence de comportement en matière de stabilité, peuvent induire, à basse vitesse, et si la fréquence de coupure fc_26 du premier filtre passe-bas 26 est trop élevée, des oscillations du couple volant qui est ressenti par le conducteur à travers le volant de conduite 3.

Pour éviter un tel inconfort de conduite, il est donc utile de réduire ladite fréquence de coupure fc_26 aux basses vitesses.

En revanche, la fréquence de coupure fc_26 prendra une valeur élevée, supérieure à la valeur basse, et typiquement supérieure à 10 Hz, voire à 20 Hz ou à 30 Hz, et pouvant atteindre 60 Hz, pour les hautes vitesses (typiquement au-delà de 30 km/h, et plus globalement dans le domaine de haute vitesse DII).

En effet, une valeur trop basse de fréquence de coupure engendre un retard (déphasage) entre l'obtention du couple volant estimé T3_estim et le couple volant réel T3 appliqué par le conducteur, ce qui se traduite par des désagréments en termes de ressenti de la direction par le conducteur, la direction paraissant manquer de réactivité, et présenter une certaine "lourdeur" ou une certaine "mollesse".

A basse vitesse, en revanche, ce phénomène de retard est moins perceptible, ce qui autorise un abaissement de la fréquence de coupure fc_26 sans nuire au confort de conduite.

Respectivement, de manière alternative ou complémentaire au filtrage du terme de raideur T3_stiff, le terme de dissipation T3_visc (composante « amortisseur visqueux ») est préférentiellement filtré au moyen d'un (second) filtre passe-bas 27, dont la fréquence de coupure fc_27 est de préférence ajustée selon la vitesse longitudinale du véhicule Vvehic.

Ici encore, le filtrage passe-bas permet avantageusement de réduire voire d'éliminer le bruit, tandis que l'ajustement de la fréquence de coupure fc_27 permet d'optimiser les réponses statique et dynamique de la reconstruction de couple et de l'asservissement du moteur d'assistance 12 qui en découle.

On notera que le second filtre passe-bas 27 associé au terme de dissipation T3_visc influe également sur le ressenti tactile procuré au conducteur à travers le volant de conduite 3.

A ce titre, on notera que l'on pourra par exemple réduire la fréquence de coupure fc_27 lorsque la vitesse du véhicule Vvehic est inférieure ou égale à un seuil caractérisant des « basses vitesses », par exemple inférieure ou égale à un seuil de 50 km/h, et plus particulièrement dans le domaine de basse vitesse DI susmentionné, afin notamment d'éviter de donner au conducteur une sensation de lourdeur, c'est-à-dire une sensation de comportement visqueux de la direction assistée, lors des manœuvres du volant 3.

Plus particulièrement, la fréquence de coupure fc_27 pourra suivre une loi d'évolution identique à celle décrite plus haut en référence à la figure 7.

La fréquence de coupure fc_27 du second filtre passe-bas pourra le cas échéant être égale à a fréquence de coupure fc_26 du premier filtre passe-bas.

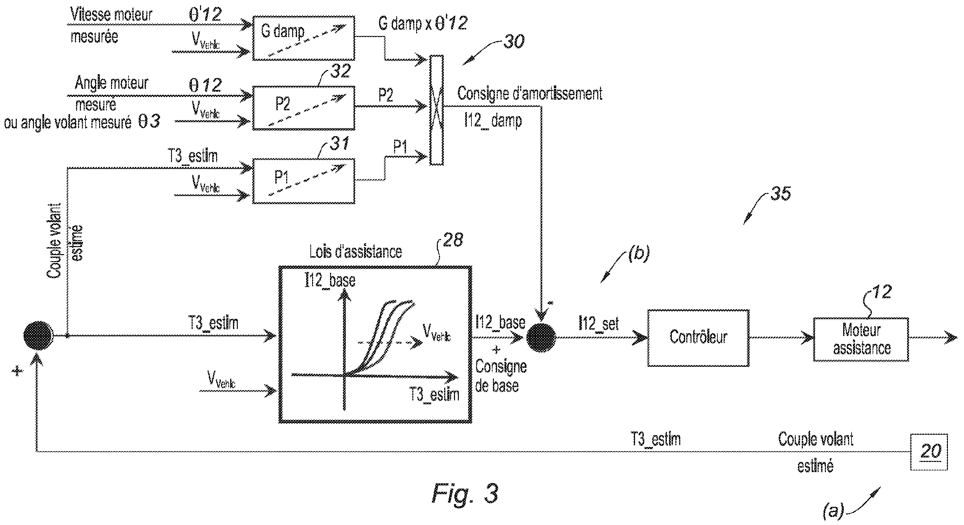

Selon une variante de mise en œuvre, illustrée sur la figure 3, le procédé comprend, après l'étape (a) de reconstruction de couple, une étape (b) de régulation en boucle ouverte du moteur d'assistance 12, au cours de laquelle on détermine une consigne de couple moteur I12_set que l'on applique au moteur d'assistance 12.

Un tel asservissement en boucle ouverte, dit aussi asservissement par « boost curves », connu en soi, consiste à déterminer, à partir de la valeur connue du couple volant T3 (ici à partir du couple volant estimé T3_estim issu de l'unité de reconstruction 20), une consigne de couple moteur I12_set, qui peut s'exprimer de manière équivalente et préférentielle sous forme d'une consigne de courant moteur I12_set, que l'on applique au moteur d'assistance 12.

En l'espèce la consigne de couple moteur I12_set comprend d'une part une consigne de base I12_base, qui est déterminée à partir du couple volant estimé T3_estim, selon des lois d'assistance (« boost curves ») 28 prédéfinies, et d'autre part une consigne d'amortissement (ou « couple d'amortissement ») I12_damp, qui est calculée, selon une caractéristique préférentielle qui peut constituer une invention à part entière, en fonction de la vitesse angulaire de rotation de l'arbre du moteur d'assistance θ'12 (dite ci-après « vitesse moteur »), et qui sert à ajuster la consigne de base I12_base.

A cet effet, ladite consigne d'amortissement I12_damp est de préférence ajoutée algébriquement à ladite consigne de base I12_base, de telle sorte que la consigne de couple moteur I12_set correspond à la somme algébrique de la consigne de base et de la consigne d'amortissement.

La contribution de la consigne d'amortissement I12_damp ayant pour objectif d'améliorer la stabilité de l'asservissement en boucle ouverte, et donc ayant potentiellement un effet modérateur (réducteur) sur la consigne de couple moteur I12_set, on affectera, par simple convention de représentation, un signe positif à la consigne de base I12_base et un signe négatif à la consigne d'amortissement I12_damp, de telle sorte que la somme algébrique susmentionnée s'écrit sous forme d'une soustraction :

$$I12\_set = I12\_base - I12\_damp$$

Les lois d'assistance 28 seront stockées sous forme d'abaque ou « cartographie » (« map ») dans une mémoire non volatile d'une unité de calcul correspondante du dispositif de direction assistée 1.

De façon connue en soi, lesdites lois d'assistance 28 associeront, selon une fonction croissante, une consigne de base de couple moteur I12_base à chaque valeur de couple volant (estimé) T3_estim.

Lesdites lois d'assistance 28 pourront également être ajustées en fonction de la vitesse Vvehic du véhicule, afin typiquement d'augmenter l'assistance à faible vitesse (par exemple pour faciliter les manœuvres de stationnement du véhicule) et au contraire de réduire l'assistance à vitesse plus élevée, notamment au-delà de 50 km/h, et plus particulièrement dans le domaine de haute vitesse DII susmentionné (la résistance de la direction aux manœuvres de braquage étant en effet généralement moins importante à vitesse élevée).

Tel que cela est illustré sur la figure 3, la consigne d'amortissement I12_damp sera quant à elle préférentiellement calculée, au sein d'une unité d'amortissement 30, à partir de la vitesse moteur θ'12, et plus particulièrement proportionnellement à la vitesse moteur θ'12, en appliquant à la vitesse moteur θ'12, qui sera de préférence obtenue par dérivation de l'angle moteur θ12 comme décrit plus haut, un gain d'amortissement Gdamp.

L'intérêt d'une telle disposition sera mieux compris en lisant ce qui suit.

Lorsque l'on asservit en boucle ouverte un dispositif de direction assistée, en se basant sur une mesure (directe) du couple volant T3, il est en effet connu de stabiliser l'asservissement par un amortissement qui utilise un retour de dérivée de couple volant.

Cependant, une telle méthode connue nécessite en pratique de mesurer directement le couple volant T3 au moyen d'un capteur de couple volant 14, non seulement afin que l'information sur la valeur du couple volant T3 soit disponible, mais également pour que le signal correspondant soit acquis sur une bande passante suffisamment large (typiquement d'au moins 100 Hz) pour que le calcul subséquent obtenu en dérivant ce signal de couple pour obtenir la dérivée du couple volant ne présente pas en lui-même d'instabilité.

Or, aucune mesure directe du couple volant T3 n'étant ici disponible (pour cause de défaillance ou d'absence de capteur de couple 14), et l'unité 20 de reconstruction du couple volant estimé T3_estim ayant une bande passante relativement étroite (et donc insuffisante pour empêcher l'apparition d'instabilités, notamment entre 15 Hz et 25 Hz), la méthode d'amortissement connue n'est pas applicable telle quelle.

En revanche, les inventeurs ont constaté que la reconstruction de couple moteur estimé T3_estim, qui est représentatif du couple volant T3, s'effectuait, selon l'invention, à partir (entre autres) de l'angle moteur θ12, c'est-à-dire qu'il existait un lien associant le couple volant T3 et l'angle moteur θ12, et ont découvert qu'il était possible, par extension, d'établir également un lien de représentativité entre les dérivées respectives de ces grandeurs, c'est-à-dire d'établir un lien associant la dérivée de l'angle moteur, donc la vitesse moteur θ'12, à une forme de dérivée de couple.

Par conséquent, les inventeurs ont découvert qu'il était effectivement possible d'utiliser la vitesse moteur θ'12 (plutôt que la dérivée du couple volant estimé T3_estim), calculée par dérivation de l'angle moteur θ12 mesuré, comme signal de base pour calculer un retour amortisseur efficace, c'est-à-dire pour calculer une consigne d'amortissement I12_damp à la fois pertinente et stable.

Avantageusement, la dérivée de l'angle moteur, c'est-à-dire la vitesse moteur θ'12, tout en étant représentative (indirectement) de la dérivée du couple volant T3, ne présente en effet pas, contrairement à une dérivée de couple volant qui serait calculée en dérivant le couple volant estimé T3_estim, de restriction de bande passante qui serait suffisamment sévère pour introduire une instabilité de l'asservissement en boucle ouverte dans le domaine de fréquences visé.

Le gain d'amortissement Gdamp (ou « gain dérivée »), que l'unité d'amortissement 30 détermine et applique à la vitesse moteur θ'12, pourra quant à lui avantageusement être ajusté en fonction de la vitesse du véhicule Vvehic.

Plus particulièrement, on pourra augmenter le gain d'amortissement Gdamp aux vitesses basses (moins de 50 km/h, et plus particulièrement dans le domaine de basse vitesse DI susmentionné) et réduire ledit gain d'amortissement Gdamp au-delà, aux vitesses élevées (typiquement dans le domaine de haute vitesse DII), de manière à obtenir davantage d'amortissement, et donc plus de stabilité, aux vitesses basses qu'aux vitesses élevées.

De préférence, et tel que cela est illustré sur la figure 3, la consigne d'amortissement I12_damp est par ailleurs pondérée par au moins un premier coefficient de pondération P1 qui dépend de la valeur du couple volant estimé T3_estim.

Ce premier coefficient de pondération P1 est défini par une première unité de pondération 31, afin de distinguer une situation dite de « volant tenu », dans laquelle le conducteur tient en main le volant de conduite 3, d'une situation dite de « volant lâché », dans laquelle le conducteur a lâché le volant de conduite 3, et d'adapter la consigne d'amortissement I12_damp en conséquence.

L'objectif est de réduire le premier coefficient de pondération P1, et donc la contribution de la consigne d'amortissement I12_damp dans la définition de la consigne de couple moteur I12_set, lorsque l'on se trouve en situation de volant tenu.

Une telle situation de volant tenu est caractérisée par un couple volant T3, et donc un couple volant estimé T3_estim, relativement élevé (typiquement égal ou supérieur à 2 N.m).

En réduisant (en valeur absolue) le premier coefficient de pondération P1 en situation de volant tenu, on évite avantageusement de donner au conducteur, à travers le volant 3, une sensation tactile de viscosité et de manque de réactivité du dispositif de direction assistée.

A l'inverse, le premier coefficient de pondération P1 sera augmenté (en valeur absolue) lorsque l'on se trouve en situation de volant lâché, laquelle est caractérisée par un couple volant T3, et donc un couple volant estimé T3_estim, relativement faible (typiquement égal ou inférieur à 1 N.m).

De la sorte, on pourra avantageusement amortir les oscillations libres du volant de conduite 3 et éviter en particulier que le volant de conduite 3 puisse être sujet à des sursauts angulaires rapides et de grande amplitude, non maîtrisés, qui pourraient par exemple provoquer une embardée du véhicule avant que le conducteur n'ait pu réagir et reprendre ledit volant 3 en main.

A titre d'exemple, le premier coefficient de pondération P1 pourra varier sur une échelle allant de zéro à un, la valeur un étant appliquée si le couple volant estimé T3_estim est égal ou inférieur à 1 N.m, la valeur zéro étant appliquée si le couple volant estimé T3_estim est égal ou supérieur à 2 N.m, et une fonction globalement décroissante appropriée, par exemple linéaire, étant utilisée pour faire varier, en fonction du couple volant estimé T3_estim, ledit premier coefficient de pondération P1 entre ces deux valeurs.

On notera que le premier coefficient de pondération P1 peut également évoluer avec la vitesse du véhicule Vvehic.

De préférence, tel que cela est illustré sur la figure 3, la consigne d'amortissement I12_damp est (également) pondérée par un second coefficient de pondération P2 qui dépend de l'angle moteur θ012, et/ou, de manière équivalente ou complémentaire, et de façon préférentielle, qui dépend de l'angle volant θ3.

On notera à ce titre que, aux fins de calculer ledit second coefficient de pondération P2, l'angle volant θ3 et l'angle moteur θ12 pourront fournir une information de position angulaire sensiblement équivalente, à condition que l'on prenne en considération, le cas échéant, le rapport global de transmission des différentes liaisons cinématiques qui relient le moteur d'assistance 12 à la colonne de direction 4 et au volant 3.

Ce second coefficient de pondération P2, défini par une seconde unité de pondération 32, permettra de tenir compte de l'éloignement éventuel du volant de conduite 3 par rapport à sa position centrale (correspondant à la situation dans laquelle le véhicule évolue en ligne droite, ou au voisinage de la ligne droite).

Ledit second coefficient de pondération P2 sera ainsi plus élevé lorsque l'angle moteur θ12, et/ou respectivement l'angle volant θ3, sera faible, voire nul, c'est-à-dire lorsque le volant 3 se trouvera au voisinage de sa position centrale (c'est-à-dire lorsque le véhicule suivra une trajectoire proche de la ligne droite), tandis que ledit second coefficient de pondération P2 sera plus faible lorsque l'angle moteur θ12, et/ou respectivement l'angle volant θ3, augmentera et/ou dépassera un seuil d'amplitude prédéterminé, de manière à ce que l'amortissement ne perturbe pas le mouvement naturel de recentrage du volant 3 après une manœuvre de braquage.

Par ailleurs, ici encore, le second coefficient de pondération P2 pourra être ajusté en fonction de la vitesse du véhicule, et plus particulièrement en suivant une fonction décroissante de ladite vitesse du véhicule, c'est-à-dire en diminuant (en valeur absolue) ledit second coefficient de pondération P2 lorsque la vitesse du véhicule Vvéhic augmente.

En définitive, la consigne d'amortissement I12_damp pourra être déterminée par la formule :

$$I12\_damp = P2 \times P1 \times Gdamp \times \theta'12.$$

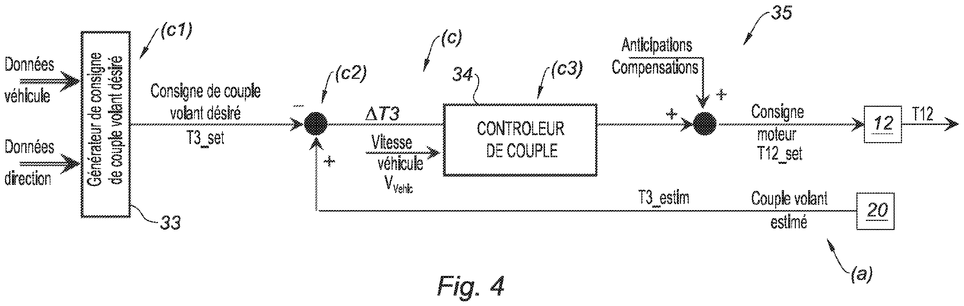

Selon une autre variante de mise en œuvre illustrée sur la figure 4, le procédé comprend, après l'étape (a) de reconstruction de couple, une étape (c) de régulation en boucle fermée du moteur d'assistance 12, au cours de laquelle on détermine une consigne de couple moteur (ou, de manière équivalente, une consigne de courant moteur) T12_set que l'on applique au moteur d'assistance 12.

De préférence, cette régulation en boucle fermée utilise le couple volant T3 comme paramètre asservi.

A ce titre, le procédé peut comprendre une étape (c1) de définition d'une consigne de couple volant, au cours de laquelle on génère une consigne de couple volant T3_set qui est représentative d'une valeur de couple volant T3 que l'on souhaite atteindre.

La consigne de couple volant T3_set sera générée, en temps réel, par une unité 33 génératrice de consigne de couple volant, selon des lois d'assistance prédéfinies, qui peuvent typiquement se présenter sous forme de cartographies, ou « maps », et qui associent à chaque situation de vie du véhicule 2 une consigne de couple volant T3_set qui correspond au couple volant T3 qui devrait être ressenti au volant 3 à l'instant considéré, compte-tenu de ladite situation de vie du véhicule.

A cet effet, l'unité 33 génératrice de consigne de couple volant utilise en entrée d'une part des « données véhicule », représentatives de la situation dynamique du véhicule 2 à l'instant considéré, telles que la vitesse longitudinale dudit véhicule Vvehic, l'accélération latérale dudit véhicule, etc., et d'autre part, des « données direction », représentatives de la configuration du dispositif de direction assistée 1 à l'instant considéré, telles que l'angle de braquage, la vitesse de rotation θ'3 du volant de conduite 3, etc., données à partir desquelles ladite unité génératrice 33 détermine la consigne de couple volant T3_set.

Le procédé comprend ensuite une étape (c2) de détermination d'erreur de couple volant au cours de laquelle on calcule la différence, dite « erreur de couple volant » $\Delta T3$, entre la consigne de couple volant T3_set et la valeur effective du couple volant, qui est ici connue par la valeur de couple volant estimé T3_estim obtenue lors de l'étape (a) de reconstruction de couple volant (plutôt que par une mesure au moyen d'un capteur 14 spécifique).

En d'autres termes, l'étape (a) de reconstruction de couple volant selon l'invention permet ici de "refermer" la boucle d'asservissement en assurant, par reconstruction, l'équivalent d'une mesure, indirecte, de la grandeur asservie, à savoir du couple volant T3.

Le procédé comprend ensuite une étape (c3) de détermination de consigne de couple moteur au cours de laquelle on génère, au moyen d'une unité de détermination de consigne de couple moteur 34 (ou « contrôleur de couple »), une consigne de couple moteur T12_set qui est destinée à être appliquée au moteur d'assistance 12 de manière à ce que le moteur d'assistance 12 puisse agir pour réduire l'erreur de couple volant $\Delta T3$.

En d'autres termes, en application de la consigne de couple moteur T12_set, le moteur d'assistance 12 délivrera un couple d'assistance T12 qui permettra de faire converger le couple volant effectif T3 vers la valeur-cible que constitue la consigne de couple volant T3_set, ce qui aura pour effet de réduire l'erreur de couple $\Delta T3$ (c'est-à-dire de la rapprocher de zéro).

Par ailleurs, selon une variante possible de mise en œuvre, on peut également prévoir d'ajouter, de préférence par somme algébrique, des composantes correctives, telle qu'une composante d'anticipation et/ou une composante de compensation, pour former, *in fine*, la consigne de couple moteur T12_set qui est alors appliquée au moteur d'assistance 12.

Une « composante d'anticipation », dite aussi « composante de pré-positionnement », est une composante correctrice, de type offset, qui est introduite d'emblée dans la consigne de couple moteur T12_set, typiquement pour augmenter l'ampleur de ladite consigne de couple moteur T12_set, lorsque l'on sait par avance, avant même d'appliquer au moteur d'assistance 12 la consigne de couple moteur T12_set, que le système de direction ne se comportera par exactement comme on souhaiterait qu'il se comporte.

A titre d'exemple, si l'on observe systématiquement l'apparition d'une erreur statique non nulle dont on connaît la valeur, la composante d'anticipation permettra d'augmenter la consigne de couple moteur T12_set d'une valeur (d'offset) correspondant à ladite erreur statique.

Une « composante de compensation » pourra quant à elle être par exemple destinée à compenser les effets des frottements secs ou bien les effets de l'inertie du mécanisme de direction.

Dans le cas des frottements secs, on pourra calculer une valeur estimée desdits frottements, par tout moyen approprié, et ensuite appliquer une composante de compensation de frottement dont la valeur correspondra à ladite valeur estimée des frottements.

Dans le cas de l'inertie, qui tend à induire un retard dans la réaction du système, on pourra par exemple calculer une composante de compensation d'inertie dont la valeur sera égale au produit d'un gain (dit « gain de dérivée seconde »), représentatif de l'inertie, par la dérivée temporelle seconde de la position angulaire θ3 du volant de conduite (c'est-à-dire l'accélération angulaire du volant de conduite).

Bien entendu, l'invention concerne en tant que tel un module 35 de gestion d'une direction assistée, permettant la mise en œuvre d'un procédé selon l'invention.

Ledit module de gestion 35, et plus particulièrement chacune de tout ou partie de ses unités de reconstruction de couple volant 20, de calcul de terme de raideur 22, de calcul de terme de dissipation 25, de filtrage passe-bas 26, 27, d'amortissement 30, d'application des lois d'assistance 28, de pondération 31, 32, de génération de consigne de couple volant 33, de détermination de consigne moteur 34, et/ou encore le circuit de mesure principal 21, pourra être formé(e) par un circuit électronique, une carte électronique, un calculateur (ordinateur), un automate programmable, ou tout autre dispositif équivalent.

Chacun desdits module ou unités pourra présenter une structure de commande physique, liée au câblage de ses composants électroniques, et/ou, de préférence, une structure de commande virtuelle, définie par une programmation informatique.

Bien entendu, l'invention est limitée aux seules variantes de réalisation décrites dans les revendications ci-jointes.

**Revendications**

1. Procédé de gestion d'un dispositif de direction assistée (1) pour véhicule (2), ledit dispositif de direction assistée (1) comprenant un volant de conduite (3) qui permet à un conducteur de manœuvrer ledit dispositif de direction assistée en exerçant un effort, dit couple volant (T3), sur ledit volant de conduite (3), ainsi qu'un moteur d'assistance (12) destiné à fournir un effort d'assistance (T12) pour assister la manœuvre dudit dispositif de direction assistée (1), ledit procédé étant tel qu'il comprend une étape (a) de reconstruction de couple volant au cours de laquelle on évalue le couple volant (T3), tel que celui-ci est effectivement exercé par le conducteur sur le volant de conduite (3), en reconstruisant une information représentative dudit couple volant (T3), dite couple volant estimé (T3_estim), à partir de données dites « données externes » ($\theta$3, $\theta$12, $\theta$'3, $\theta$'12) que l'on recueille au sein du dispositif de direction assistée (1) ou au sein du véhicule (2), mais en dehors d'un capteur de couple volant (14) spécifiquement dédié à la mesure dudit couple volant, lesdites données externes comprenant une valeur dite angle volant ($\theta$3) représentative de la position angulaire du volant de conduite (3), une valeur dite angle moteur ($\theta$12) représentative de la position angulaire de l'arbre du moteur d'assistance (12), ainsi que les dérivées temporelles ($\theta$'3, $\theta$'12) dudit angle volant et dudit angle moteur **caractérisé en ce que**, lors de l'étape (a) de reconstruction de couple volant, on recueille comme données externes d'une part une valeur dite angle volant ($\theta$3) représentative de la position angulaire du volant de conduite (3), et d'autre part une valeur dite angle moteur ($\theta$12) représentative de la position angulaire de l'arbre du moteur d'assistance (12), on calcule la différence, dite déplacement relatif ($\Delta\theta$), entre l'angle volant et l'angle moteur, puis l'on multiplie le déplacement relatif ($\Delta\theta$) par un coefficient de raideur (K) prédéterminé, de sorte à obtenir une première composante de l'angle volant estimé, dite terme de raideur (T3_stiff).

2. Procédé selon la revendication 1 **caractérisé en ce que**, lors de l'étape (a) de reconstruction de couple volant, on calcule la dérivée temporelle de l'angle volant ($\theta$3) pour estimer la vitesse angulaire de rotation du volant de conduite, dite « vitesse volant » ($\theta$'3), on calcule la dérivée temporelle de l'angle moteur ($\theta$12) pour estimer la vitesse angulaire de rotation de l'arbre du moteur d'assistance, dite « vitesse moteur » ($\theta$'12), on calcule la différence, dite « vitesse relative » ($\Delta\theta$'), entre la vitesse volant ($\theta$'3) et la vitesse moteur ($\theta$'12), puis l'on multiplie la vitesse relative ($\Delta\theta$') par un coefficient de viscosité (R) prédéterminé, de sorte à obtenir une seconde composante de l'angle volant estimé, dite « terme de dissipation » (T3_visc), que l'on ajoute au terme de raideur (T3_stiff) pour obtenir le couple volant estimé (T3_estim).

3. Procédé selon l'une des revendications 1 ou 2 **caractérisé en ce que** le terme de raideur (T3_stiff), et/ou respectivement le terme de dissipation (T3_visc), sont filtrés au moyen de filtres passe-bas (26, 27), dont la fréquence de coupure (fc_26, fc_27) est de préférence ajustée selon la vitesse longitudinale du véhicule (Vvehic).

4. Procédé selon l'une des revendications 1 à 3 **caractérisé en ce que** le coefficient de raideur (K), et/ou respectivement le coefficient de viscosité (R), sont ajustés en fonction de la vitesse longitudinale (Vvehic) du véhicule (2).

5. Procédé selon la revendication 4 **caractérisé en ce que** le coefficient de raideur (K) suit une loi d'évolution en fonction de la vitesse du véhicule (Vvehic), dite « loi de raideur » (LK), selon laquelle le coefficient de raideur (K) décroît tout d'abord, par rapport à sa valeur initiale (K0) associée à une vitesse (Vvehic) nulle, pour atteindre un minimum (Kmin) associé à une vitesse dite « vitesse d'inversion » (Vvehic_inv), et augmente ensuite de nouveau de façon croissante avec la vitesse, de sorte à atteindre de nouveau puis dépasser la valeur initiale (K0) à partir et au-delà d'une vitesse dite « vitesse seuil » (Vvehic_seuil), qui marque la frontière entre un premier intervalle de vitesses, dit « domaine de basse vitesse » (DI), et un second intervalle de vitesses, dit « domaine de haute vitesse » (DII).

6. Procédé selon la revendication 4 ou 5, **caractérisé en ce que** le coefficient de viscosité (R) suit une loi d'évolution, dite « loi de viscosité » (LR), décroissante en fonction de la vitesse du véhicule (Vvehic).

7. Procédé selon l'une des revendications précédentes **caractérisé en ce qu'**il comprend, après l'étape (a) de reconstruction de couple, une étape (b) de régulation en boucle ouverte du moteur d'assistance, au cours de laquelle on détermine une consigne de couple moteur (I12_set) que l'on applique au moteur d'assistance (12), ladite consigne de couple moteur comprenant d'une part une consigne de base (I12_base), qui est déterminée à partir du couple volant estimé (T3_estim), selon des lois d'assistance (28) prédéfinies, et d'autre part une consigne d'amortissement (I12_damp), qui est calculée en fonction de la vitesse angulaire de rotation de l'arbre du moteur d'assistance ($\theta$'12), dite « vitesse moteur » ($\theta$'12), et qui sert à ajuster la consigne de base (I12_base), ladite consigne d'amortissement (I12_damp) étant à cet effet de préférence ajoutée algébriquement à ladite consigne de base (I12_base).

8. Procédé selon la revendication 7 **caractérisé en ce que** la consigne d'amortissement (I12_damp) est calculée proportionnellement à la vitesse moteur ($\theta$'12), en appliquant à ladite vitesse moteur ($\theta$'12) un gain d'amortissement (Gdamp).

9. Procédé selon la revendication 7 ou 8 **caractérisé en ce que** la consigne d'amortissement (I12_damp) est pondérée par au moins un premier coefficient de pondération (P1) qui dépend de la valeur du couple volant estimé (T3_estim).

10. Procédé selon l'une des revendications précédentes **caractérisé en ce que**, l'angle volant ($\theta$3) est mesuré au moyen d'un capteur de position angulaire de volant (23) associé au volant de conduite.

11. Procédé selon l'une des revendications précédentes **caractérisé en ce que**, l'angle moteur ($\theta$12) est mesuré au moyen d'un capteur de position angulaire moteur (24), par exemple de type resolver, qui est intégré au moteur d'assistance (12).

12. Procédé selon l'une des revendications précédentes **caractérisé en ce qu'**il gère un dispositif de direction assistée (1) au sein duquel le volant de conduite (3) est monté sur une colonne de direction (4) qui engrène sur une crémaillère de direction (6), et au sein duquel le moteur d'assistance (12) vient en prise sur ladite colonne de direction (4) ou sur ladite crémaillère de direction (6), **en ce que** ledit dispositif de direction assistée (1) comporte un capteur de couple volant spécifique (14), monté sur la colonne de direction (4) et agencé pour fournir, en fonctionnement normal, une mesure directe du couple volant (T3), et **en ce que** l'étape (a) de reconstruction de couple volant intervient automatiquement en cas de défaillance du capteur de couple volant spécifique (14) pour substituer une valeur de couple volant estimée (T3_estim) à la mesure directe du couple volant (T3).

13. Procédé selon l'une des revendications 1 à 11 **caractérisé en ce qu'**il gère un dispositif de direction assistée (1) au sein duquel le volant de conduite (3) est monté sur une colonne de direction (4) qui engrène sur une crémaillère de direction (6), et au sein duquel le moteur d'assistance (12) vient en prise sur ladite colonne de direction (4) ou sur ladite crémaillère de direction (6), **en ce que** la colonne de direction (4) est dépourvue de capteur de couple volant spécifique (14), et plus particulièrement dépourvue de barre de torsion (15) destinée à mesurer le couple volant (T3), et **en ce que** l'étape (a) de reconstruction de couple volant est utilisée en fonctionnement normal pour fournir la valeur de couple volant (T3_estim) nécessaire à la gestion du dispositif de direction assistée (1), et plus particulièrement à l'asservissement du moteur d'assistance (12).

**Patentansprüche**

1. Verfahren zur Verwaltung einer Vorrichtung zur unterstützten Lenkung (1) für ein Fahrzeug (2), wobei die Vorrichtung zur unterstützten Lenkung (1) ein Lenkrad (3) umfasst, das einem Lenker ermöglicht, die Vorrichtung zur unterstützten Lenkung zu manövrieren, indem er eine Kraft, die Lenkradmoment (T3) genannt wird, auf das Lenkrad (3) ausübt, sowie einen Unterstützungsmotor (12), der dazu bestimmt ist, eine Unterstützungskraft (T12) zum Unterstützen des Manövers der Vorrichtung zur unterstützten Lenkung (1) bereitzustellen, wobei das Verfahren dergestalt ist, dass es einen Schritt (a) zur Rekonstruktion eines Lenkradmoments umfasst, im Laufe dessen das Lenkradmoment (T3), so wie dieses tatsächlich durch den Lenker auf das Lenkrad (3) ausgeübt wird, bewertet wird, indem eine für das Lenkradmoment (T3) repräsentative Information, die geschätztes Lenkradmoment (T3_estim) genannt wird, aus "externen Daten" ($\theta$3, $\theta$12, $\theta$'3, $\theta$'12) genannten Daten rekonstruiert wird, die innerhalb der Vorrichtung zur unterstützten Lenkung (1) oder innerhalb des Fahrzeugs (2), jedoch außerhalb eines Lenkradmomentsensors (14) gesammelt werden, der speziell der Messung des Lenkradmoments gewidmet ist, wobei die externen Daten einen Lenkradwinkel ($\theta$3) genannten Wert umfassen, der repräsentativ für die Winkelposition des Lenkrades (3) ist, einen Motorwinkel ($\theta$12) genannten Wert, der repräsentativ für die Winkelposition der Welle des Unterstützungsmotors (12) ist, sowie zeitliche Ableitungen ($\theta$'3, $\theta$'12) des Lenkradwinkels und des Motorwinkels, **dadurch gekennzeichnet, dass** beim Schritt (a) zur Rekonstruktion eines Lenkradmoments als externe Daten einerseits ein Lenkradwinkel ($\theta$3) genannter Wert, der repräsentativ für die Winkelposition des Lenkrades (3) ist, und andererseits ein Motorwinkel ($\theta$12) genannter Wert, der repräsentativ für die Winkelposition der Welle des Unterstützungsmotors (12) ist, gesammelt werden, die die relative Bewegung ($\Delta\theta$) genannte Differenz zwischen dem Lenkradwinkel und dem Motorwinkel berechnet wird, und die relative Bewegung ($\Delta\theta$) danach mit einem vorbestimmten Steifheitskoeffizienten (K) multipliziert wird, um eine erste Komponente des geschätzten Lenkradwinkels, die Steifheitsende (T3_stiff) genannt wird, zu erhalten.

2. Verfahren nach Anspruch 1, **dadurch gekennzeichnet, dass** beim Schritt (a) zur Rekonstruktion eines Lenkradmoments die zeitliche Ableitung des Lenkradwinkels ($\theta3$) zum Schätzen der Winkelgeschwindigkeit für eine Lenkraddrehung, die "Lenkradgeschwindigkeit" ($\theta'3$) genannt wird, berechnet wird, die zeitliche Ableitung des Motorwinkels ($\theta12$) zum Schätzen der Winkelgeschwindigkeit einer Wellendrehung des Unterstützungsmotors, die "Motorgeschwindigkeit" ($\theta'12$) genannt wird, berechnet wird, die Differenz, die "relative Geschwindigkeit" ($\Delta\theta'$) genannt wird, zwischen der Lenkradgeschwindigkeit ($\theta'3$) und der Motorgeschwindigkeit ($\theta'12$) berechnet wird, und danach die relative Geschwindigkeit ($\Delta\theta'$) mit einem vorbestimmten Viskositätskoeffizienten (R) multipliziert wird, um eine zweite Komponente des geschätzten Lenkradwinkels, die "Dissipationsende" (T3_visc) genannt wird, zu erhalten, die man zum Steifheitsende (T3_stiff) hinzufügt, um das geschätzte Lenkradmoment (T3_estim) zu erhalten.

3. Verfahren nach einem der Ansprüche 1 oder 2, **dadurch gekennzeichnet, dass** das Steifheitsende (T3_stiff) und/ oder jeweils das Dissipationsende (T3_visc) anhand von Niederpassfiltern (26, 27) gefiltert werden, deren Unterbrechungsfrequenz (fc_26, fc_27) vorzugsweise je nach Längsgeschwindigkeit des Fahrzeugs (Vvehic) angepasst wird.

4. Verfahren nach einem der Ansprüche 1 bis 3, **dadurch gekennzeichnet, dass** der Steifheitskoeffizient (K) und/ oder jeweils der Viskositätskoeffizient (R) je nach Längsgeschwindigkeit (Vvehic) des Fahrzeugs (2) angepasst werden.

5. Verfahren nach Anspruch 4, **dadurch gekennzeichnet, dass** der Steifheitskoeffizient (K) einem Entwicklungsgesetz je nach der Geschwindigkeit des Fahrzeugs (Vvehic), das "Steifheitsgesetz" (LK) genannt wird, folgt, laut dem der Steifheitskoeffizient (K) zuerst in Bezug auf seinen ursprünglichen Wert (K0), der einer Geschwindigkeit (Vvehic) Null zugewiesen ist, abnimmt, um ein Minimum (Kmin) zu erreichen, das einer "Umkehrgeschwindigkeit" (Vvehic_inv) genannten Geschwindigkeit zugewiesen ist, und danach erneut mit der Geschwindigkeit in ansteigender Form zunimmt, um erneut den ursprünglichen Wert (K0) zu erreichen und diesen danach, ausgehend von, und über eine "Schwellengeschwindigkeit" (Vvehic_seuil) genannte Geschwindigkeit hinaus, zu übersteigen, die die Grenze zwischen einem ersten Intervall an Geschwindigkeiten, das "niedrige Geschwindigkeitsdomäne" (DI) genannt wird, und einem zweiten Intervall an Geschwindigkeiten, das "hohe Geschwindigkeitsdomäne" (DII) genannt wird, markiert.

6. Verfahren nach Anspruch 4 oder 5, **dadurch gekennzeichnet, dass** der Viskositätskoeffizient (R) einem Entwicklungsgesetz, das "Viskositätsgesetz" (LR) genannt wird, folgt, das je nach Fahrzeuggeschwindigkeit (Vvehic) abnehmend ist.

7. Verfahren nach einem der vorstehenden Ansprüche, **dadurch gekennzeichnet, dass** es nach dem Schritt (a) zur Rekonstruktion eines Moments einen Schritt (b) zum Regeln des Unterstützungsmotors in einem offenen Regelkreis umfasst, im Laufe dessen ein Motormomentsollwert (112_set) bestimmt wird, der auf den Unterstützungsmotor (12) angewendet wird, wobei der Motormomentsollwert einerseits einen Basissollwert (I12_base), der aus dem geschätzten Lenkradmoment (T3_estim) gemäß den vorbestimmten Unterstützungsgesetzen (28) bestimmt wird, und andererseits einen Dämpfungssollwert (I12_damp) umfasst, der je nach Winkelgeschwindigkeit einer Drehung der Unterstützungsmotorwelle ($\theta'12$), die "Motorgeschwindigkeit" ($\theta'12$) genannt wird, berechnet wird, und dazu dient, den Basissollwert (I12_base) anzupassen, wobei der Dämpfungssollwert (I12_damp) zu diesem Zweck vorzugsweise algebraisch zu dem Basissollwert (I12_base) hinzugefügt wird.

8. Verfahren nach Anspruch 7, **dadurch gekennzeichnet, dass** der Dämpfungssollwert (I12_damp) proportional zu der Motorgeschwindigkeit ($\theta'12$) berechnet wird, indem auf die Motorgeschwindigkeit ($\theta'12$) eine Dämpfungsverstärkung (Gdamp) angewendet wird.

9. Verfahren nach Anspruch 7 oder 8, **dadurch gekennzeichnet, dass** der Dämpfungssollwert (I12_damp) durch mindestens einen ersten Gewichtungskoeffizienten (P1) gewichtet wird, der von dem Wert des geschätzten Lenkradmoments (T3_estim) abhängig ist.

10. Verfahren nach einem der vorstehenden Ansprüche, **dadurch gekennzeichnet, dass** der Lenkradwinkel ($\theta3$) anhand eines Lenkrad-Winkelpositionssensors (23) gemessen wird, der dem Lenkrad zugewiesen ist.

11. Verfahren nach einem der vorstehenden Ansprüche, **dadurch gekennzeichnet, dass** der Motorwinkel ($\theta12$) anhand eines Motor-Winkelpositionssensors (24), beispielsweise in der Art eines Resolvers, gemessen wird, der in dem Unterstützungsmotor (12) integriert ist.

12. Verfahren nach einem der vorstehenden Ansprüche, **dadurch gekennzeichnet, dass** es eine Vorrichtung zur unterstützten Lenkung (1) verwaltet, innerhalb derer das Lenkrad (3) auf einer Lenksäule (4) montiert ist, die in eine Lenkzahnstange (6) eingreift, und innerhalb derer ein Unterstützungsmotor (12) in die Lenksäule (4) oder in die Lenkzahnstange (6) eingreift, dadurch, dass die Vorrichtung zur unterstützten Lenkung (1) einen speziellen Lenkradmomentsensor (14) beinhaltet, der auf der Lenksäule (4) montiert ist und angeordnet ist, um im Normalbetrieb eine direkte Messung des Lenkradmoments (T3) bereitzustellen, und dadurch, dass der Schritt (a) zur Rekonstruktion eines Lenkradmoments automatisch im Falle eines Ausfalls des speziellen Lenkradmomentsensors (14) interveniert, um die direkte Messung des Lenkradmoments (T3) durch ein geschätztes Lenkradmoment (T3_estim) zu ersetzen.

13. Verfahren nach einem der Ansprüche 1 bis 11, **dadurch gekennzeichnet, dass** es eine Vorrichtung zur unterstützten Lenkung (1) verwaltet, innerhalb derer das Lenkrad (3) auf einer Lenksäule (4) montiert ist, die in eine Lenkzahnstange (6) eingreift, und innerhalb derer der Unterstützungsmotor (12) in die Lenksäule (4) oder in die Lenkzahnstange (6) eingreift, dadurch, dass die Lenksäule (4) mit keinem speziellen Lenkradmomentsensor (14) versehen ist, und im Besonderen mit keinem Torsionsstab (15) versehen ist, der dazu bestimmt ist, das Lenkradmoment (T3) zu messen, und dadurch, dass der Schritt (a) zur Rekonstruktion eines Lenkradmoments im Normalbetrieb verwendet wird, um den Lenkradmomentwert (T3_estim) bereitzustellen, der für die Verwaltung der Vorrichtung zur unterstützten Lenkung (1), und im Besonderen für die Ansteuerung des Unterstützungsmotors (12) nötig ist.

## Claims

1. A method of managing a power steering device (1) for a vehicle (2), said power steering device (1) comprising a steering wheel (3) which allows a driver to maneuver said power steering device by exerting a force, called steering wheel torque (T3), on said steering wheel (3), as well as an assist motor (12) intended to provide an assist force (T12) to assist the maneuver of said power steering device (1), said method being such that it comprises a step (a) of reconstructing a steering wheel torque during which the steering wheel torque (T3) is evaluated, as it is actually exerted by the driver on the steering wheel (3), by reconstructing a representative information of said steering wheel torque (T3), called estimated steering wheel torque (T3_estim), from data called « external data » ($\theta 3$, $\theta 12$, $\theta'3$, $\theta'12$) which are collected within the power steering device (1) or within the vehicle (2), but excluding a steering wheel torque sensor (14) specifically dedicated to measuring of said steering wheel torque, said external data comprising a value called steering wheel angle ($\theta 3$) representative of the angular position of the steering wheel (3), a value called motor angle ($\theta 12$) representative of the angular position of the shaft of the assist motor (12), as well as the time derivatives ($\theta'3$, $\theta'12$) of said steering wheel angle and said motor angle **characterized in that**, at step (a) of reconstructing a steering wheel torque, on the one hand, a value called steering wheel angle ($\theta 3$) representative of the angular position of the steering wheel (3), and on the other hand, a value called motor angle ($\theta 12$) representative of the angular position of the shaft of the assist motor (12) are collected as external data, the difference, called relative displacement ($\Delta \theta$), between the steering wheel angle and the motor angle is calculated, then the relative displacement ($\Delta \theta$) is multiplied by a predetermined stiffness coefficient (K), so as to obtain a first component of the estimated steering wheel angle, called stiffness term (T3_stiff).

2. The method according to claim 1 **characterized in that**, at the steering wheel torque reconstruction step (a), the time derivative of the steering wheel angle ($\theta 3$) is calculated to estimate the rotational angular speed of the steering wheel, called « steering wheel speed » ($\theta'3$), the time derivative of the motor angle ($\theta 12$) is calculated to estimate the rotational angular speed of the shaft of the assist motor, called « motor speed » ($\theta'12$), the difference, called « relative speed » ($\Delta \theta'$), between the steering wheel speed ($\theta'3$) and the motor speed ($\theta'12$) is calculated, then the relative speed ($\Delta \theta'$) is multiplied by a predetermined viscosity coefficient (R), so as to obtain a second component of the estimated steering wheel angle, called « dissipation term » (T3_visc), which is added to the stiffness term (T3_stiff) in order to obtain the estimated steering wheel torque (T3_estim).

3. The method according to any of claims 1 or 2 **characterized in that** the stiffness term (T3_stiff), and/or respectively the dissipation term (T3_visc), are filtered by means of low-pass filters (26, 27), whose cut-off frequency (fc_26, fc_27) is preferably adjusted according to the longitudinal speed of the vehicle (Vvehic).

4. The method according to any of claims 1 to 3 **characterized in that** the stiffness coefficient (K), and/or respectively the viscosity coefficient (R), are adjusted depending on to the longitudinal speed (Vvehic) of the vehicle (2).

5. The method according to claim 4 **characterized in that** the stiffness coefficient (K) follows an evolution law depending on the speed of the vehicle (Vvehic), called « stiffness law » (LK), according to which the stiffness coefficient (K) first decreases, relative to its initial value (K0) associated to a zero speed (Vvehic), before reaching a minimum (Kmin) associated to a speed called « inversion speed » (Vvehic_inv), and then gradually increases again with the speed, so as to reach again and then exceed the initial value (K0) from and beyond a speed called «threshold speed » (Vvehic_threshold), which marks the boundary between a first speed interval, called « low-speed range » (DI), and a second speed interval, called « high-speed range » (DII).

6. The method according to claim 4 or 5, **characterized in that** the viscosity coefficient (R) follows an evolution law, called « viscosity law » (LR), decreasing depending on the speed of the vehicle (Vvehic).

7. The method according to any of the preceding claims, **characterized in that** it comprises, after the torque reconstruction step (a), a step (b) of open-loop regulation of the assist motor, during which a motor torque setpoint (I12_set) which is applied to the assist motor (12) is determined, said motor torque setpoint comprising, on the one hand, a base setpoint (I12_base), which is determined from the estimated steering wheel torque (T3_estim), according to predefined assist laws (28), and on the other hand, a damping setpoint (I12_damp), which is calculated depending on the rotational angular speed of the shaft of the assist motor ($\theta'12$), called « motor speed » ($\theta'12$), and which serves to adjust the base setpoint (I12_ base), said damping setpoint (I12_damp) being to this end preferably algebraically added to said base setpoint (I12_base).

8. The method according to claim 7 **characterized in that** the damping setpoint (I12_damp) is calculated proportionally to the motor speed ($\theta'12$), by applying a damping gain (Gdamp) to said motor speed ($\theta'12$).

9. The method according to claim 7 or 8 **characterized in that** the damping setpoint (I12_damp) is weighted by at least one first weighting coefficient (P1) which depends on the value of the estimated steering wheel torque (T3_estim).

10. The method according to any of the preceding claims **characterized in that** the steering wheel angle ($\theta3$) is measured by means of a steering wheel angular position sensor (23) associated to the steering wheel.

11. The method according to any of the preceding claims, **characterized in that** the motor angle ($\theta12$) is measured by means of a motor angular position sensor (24), for example of the resolver type, which is integrated into the assist motor (12).

12. The method according to any of the preceding claims **characterized in that** it manages a power steering device (1) within which the steering wheel (3) is mounted on a steering column (4) which meshes with a steering rack (6), and within which the assist motor (12) is engaged on said steering column (4) or on said steering rack (6), **in that** said power steering device (1) includes a specific steering wheel torque sensor (14), mounted on the steering column (4) and arranged to provide, in normal operation, a direct measurement of the steering wheel torque (T3), and **in that** the steering wheel torque reconstruction step (a) automatically intervenes in case of failure of the specific steering wheel torque sensor (14) to substitute an estimated steering wheel torque value (T3_estim) with the direct measurement of the steering wheel torque (T3).

13. The method according to any of claims 1 to 11 **characterized in that** it manages a power steering device (1) within which the steering wheel (3) is mounted on a steering column (4) which meshes with a steering rack (6), and within which the assist motor (12) is engaged on said steering column (4) or on said steering rack (6), **in that** the steering column (4) is devoid of a specific steering wheel torque sensor (14), and more particularly devoid of a torsion bar (15) intended to measure the steering wheel torque (T3), and **in that** the steering wheel torque reconstruction step (a) is used in normal operation to provide the steering wheel torque value (T3_estim) necessary for the management of the power steering device (1), and more particularly for the servo-control of the assist motor (12).

*Fig. 1*

*Fig. 2*

EP 3 433 159 B1

Vitesse moteur mesurée  $\theta'12$

$V_{Vehic}$

G damp

G damp x $\theta'12$

_30_

Angle moteur mesuré
ou angle volant mesuré $\theta3$  $\theta12$

$V_{Vehic}$

_32_

P2

P2

Consigne d'amortissement
I12_damp

T3_estim

$V_{Vehic}$

_31_

P1

P1

Couple volant estimé

_35_

Lois d'assistance  _28_

I12_base

$V_{Vehic}$

T3_estim

(b)

_12_

T3_estim

I12_base
+
Consigne
de base

I12_set

Contrôleur

Moteur
assistance

$V_{Vehic}$

+

T3_estim  Couple volant
estimé

_20_

*Fig. 3*

(a)

Fig. 4

Fig. 5

Fig. 6

Fig. 7

**EP 3 433 159 B1**

## RÉFÉRENCES CITÉES DANS LA DESCRIPTION

**Documents brevets cités dans la description**

- EP 1995150 A2